# EUROPEAN PATENT SPECIFICATION

(11) **EP 1 705 614 B1**
(45) Date of publication and mention of the grant of the patent: **28.12.2011**
(21) Application number: 06005952.4
(22) Date of filing: 23.03.2006
(51) Int. Cl.: G06T 7/00

(54) **Image outputting apparatus, image outputting method, and image outputting program**
Bildausgabevorrichtung, Bildausgabeverfahren und Bildausgabeprogramm
Appareil de sortie d'images, procédé de sortie d'images et programme de sortie d'images

(30) Priority: 25.03.2005 JP 2005088699; 14.02.2006 JP 2006037272
(43) Date of publication of application: 27.09.2006
(73) Proprietor: FUJIFILM Corporation, Minato-ku Tokyo (JP)
(72) Inventor: Funakura, Hiroyuki, Ashigarakami-gun Kanagawa (JP)
(74) Representative: Klunker . Schmitt-Nilson . Hirsch

(56) References cited:
- EP-A- 1 701 308
- EP-A1- 0 755 022
- WO-A-03/005702
- JP-A- 2005 109 693
- JP-A- 2005 196 639
- US-A1- 2005 146 526
- US-B1- 6 169 544
- US-B1- 6 591 005

## Description

### BACKGROUND OF THE INVENTION

### Field of the Invention

The present invention relates to an image outputting apparatus in accordance with the preamble of claim 1, an image outputting method, and an image outputting program. More particularly, the present invention relates to an image outputting apparatus, an image outputting method, and an image outputting program for automatically laying out an image based on a direction component of the image.

### Description of Related Art

Conventionally, a lot of images taken by a digital still camera during a trip have been laid out in a predetermined template to be displayed on a television monitor or be printed on a paper space for appreciation. Moreover, when the taken lots of images are printed, the images have been laid out by a designer in a magazine or an album to be provided to an appreciator. See, for example, Japanese Patent Application Publication 2004-221647.

However, images are laid out regardless of the contents of the images when the taken lots of images are laid out in a predetermined template. In this manner, since looks of an image arrangement are not considered when displaying the images made by a layout process, an appreciator can have a sense of discomfort in regard to composition of the image arrangement. Moreover, when the appreciator lays out the images in an output area in consideration of looks of an image arrangement, there has been a problem that the selection of images, the determination of composition of image arrangement, and a layout of images have a need for a large amount of labor and time.

In accordance with the preamble of claim 1, US-B1-6 169 544 discloses an image outputting apparatus in which several photographic images are laid out into the frames of a template. To this end, the layout of each image is adjusted based on the aspect ratio and the top-bottom direction of the image, the latter expression constituting an "image direction component".

### SUMMARY OF THE INVENTION

Therefore, it is an object of the present invention to provide an image outputting apparatus, an image outputting method, and an image outputting program that can solve the foregoing problems. The above and other objects can be achieved by combinations described in the independent claims. The dependent claims define further advantageous and exemplary combinations of the present invention.

The summary of the invention does not necessarily describe all necessary features of the present invention. The present invention is defined by the features included in the claims.

According to the present invention, it is possible to automatically lay out and output taken lots of images so as to have composition without a sense of discomfort.

### BRIEF DESCRIPTION OF THE DRAWINGS

The above and other objects and features and advantages of the present invention will become more apparent from the following description of the presently preferred exemplary embodiments of the invention taken in conjunction with the accompanying drawings, in which:

Fig. 1 is a conceptual diagram of an image outputting apparatus;

Fig. 2 is a block diagram showing a functional configuration of an image outputting apparatus;

Fig. 3 is a view showing a computation method of a direction component of image;

Fig. 4 is a view showing a computation method of a vanishing point;

Fig. 5 is a view showing a computation method of a vanishing point;

Fig. 6 is a view showing a computation method of a direction component of image;

Fig. 7 is a view showing a layout of images in an output area;

Fig. 8 is a view showing a layout of images in an output area;

Fig. 9 is a view showing a layout of images in an output area;

Fig. 10 is a view showing a layout of images in an output area;

Fig. 11 is a view showing a layout of images in an output area;

Fig. 12 is a view showing a layout of images in an output area;

Fig. 13 is a view showing a layout of images in an output area;

Fig. 14 is a block diagram showing a functional configuration of an image outputting apparatus;

Fig. 15 is a view showing a template stored on a template storing section;

Fig. 16 is a view showing a process of an image rotation processing section and a trimming section;

Fig. 17 is a view showing a process of a converted image generating section and a trimming section;

Fig. 18 is a view showing a process of a direction component determining section; and

Fig. 19 is a block diagram showing a hardware configuration of an image outputting apparatus.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention as defined by the appended claims.

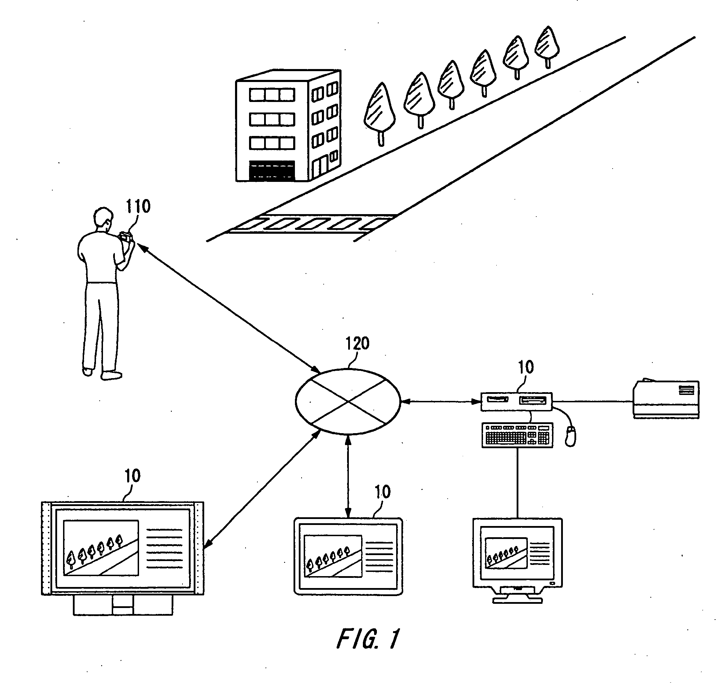

Fig. 1 is a conceptual diagram showing an image outputting apparatus 10 according to an embodiment of the present invention. The image outputting apparatus 10 lays out images taken by an image capturing apparatus 110 in an output area based on direction components of images. Here, an output area means a display area displaying images or a printing area printing images. Further, the image outputting apparatus 10 outputs images laid out. For example, the image outputting apparatus 10 may output the laid out images on a monitor of a personal computer. Moreover, the image outputting apparatus 10 may be a personal digital assistant such as a portable telephone and a PDA. Moreover, the image outputting apparatus 10 may be a printer that can print the laid out images as printed matter.

Furthermore, the image outputting apparatus 10 may be a displaying apparatus that receives image data via a network 120 to display the image data on a TV receiver or a photo stand. For example, the network 120 may be Internet or LAN. In addition, the image outputting apparatus 10 may not only transmit and receive image data via the network 120, but also be supplied with image data via a storage device using a magnetic recording medium or a semiconductor recording medium provided in the image capturing apparatus 110. Furthermore, the image outputting apparatus 10 may be supplied with image data by means of radio communication and optical communication.

An object of the image outputting apparatus 10 according to the present embodiment is to automatically lays out taken images so as to have composition without a sense of discomfort to an appreciator based on direction components of the taken images.

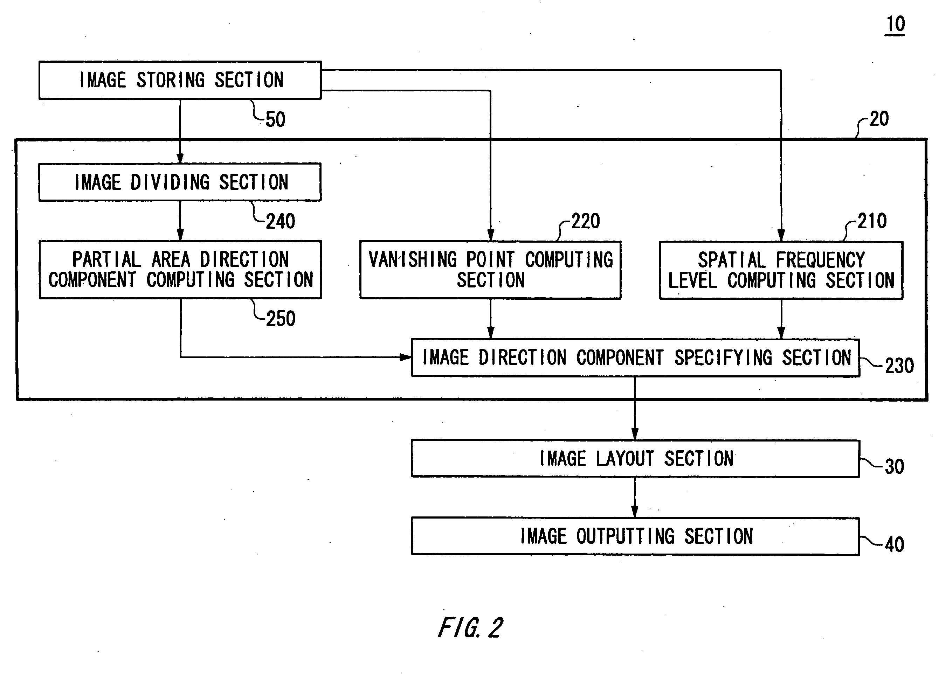

Fig. 2 is a view exemplary showing a functional configuration of the image outputting apparatus 10 according to the present embodiment. The image outputting apparatus 10 includes an image direction component computing section 20, an image layout section 30, an image outputting section 40, and an image storing section 50. The image direction component computing section 20 has a spatial frequency level computing section 210, a vanishing point computing section 220, an image direction component specifying section 230, an image dividing section 240, and a partial area direction component computing section 250. The image storing section 50 stores images that have been taken. The image storing section 50 may store the taken images in association with an image identifier by which each image can uniquely be identified. Then, the image storing section 50 supplies image data to the spatial frequency level computing section 210, the vanishing point computing section 220, and the image dividing section 240.

The image direction component computing section 20 receives the image data from the image storing section 50, and computes a direction component of image shown by the image data. The image dividing section 240 receives the image data from the image storing section 50, and divides the image data into a plurality of partial areas. The image dividing section 240 supplies the image data for the divided partial area to the partial area direction component computing section 250. The partial area direction component computing section 250 computes direction components of the plurality of partial areas divided by the image dividing section 240. The partial area direction component computing section 250 supplies data showing the computed direction components of the plurality of partial areas to the image direction component specifying section 230.

Moreover, the spatial frequency level computing section 210 may receive image data from the image storing section 50. Then, the spatial frequency level computing section 210 respectively computes a level of a spatial frequency component along a plurality of directions in the image data. The spatial frequency level computing section 210 supplies data each showing the computed levels of the spatial frequency components to the image direction component specifying section 230. The vanishing point computing section 220 receives image data from the image storing section 50. Then, the vanishing point computing section 220 computes a vanishing point of an object included in the image. The vanishing point computing section 220 supplies the computed data of the vanishing point of the object to the image direction component specifying section 230.

The image direction component specifying section 230 specifies a direction component of image. The image direction component specifying section 230 supplies data showing the specified direction component to the image layout section 30. The image layout section 30 receives the data showing the direction component of image computed from the image direction component specifying section 230. Then, the image layout section 30 lays out the image in an output area based on the direction component of image. The image layout section 30 supplies image data of which the image is laid out in the output area to the image outputting section 40.

The image outputting section 40 receives the image data laid out by the image layout section 30 in the output area. Then, the image outputting section 40 outputs the image laid out in the output area. In addition, the image outputting section 4 0 may output the image data to, e.g., a TV receiver. Furthermore, the image outputting section 40 may print the image data laid out by the image layout section 30 on a page space to output the data.

According to the image outputting apparatus 10 according to the present embodiment, it is possible to specify direction components of images to automatically lay out the taken images in an output area based on the specified direction components. In this way, an appreciator can output images laid out not to have a sense of discomfort in regard to composition of the images, without painful and time-consuming operations that the appreciator determines a layout of images personally.

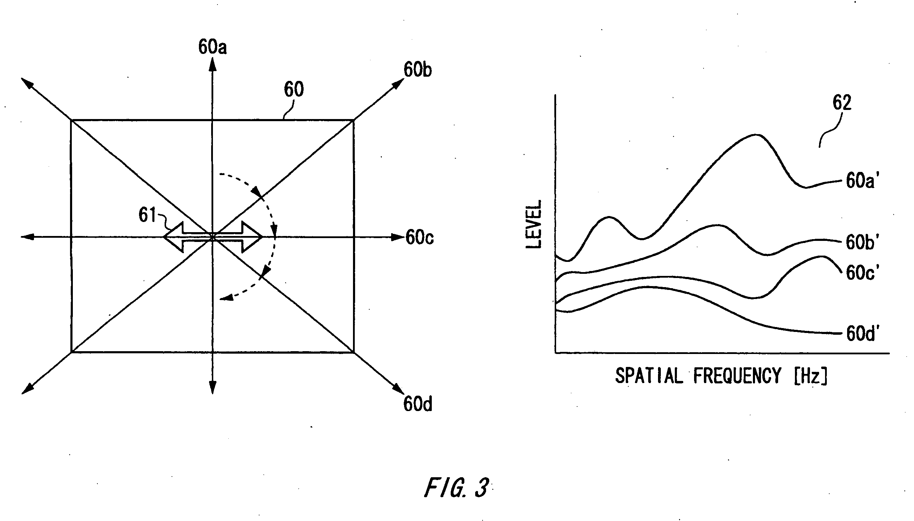

Fig. 3 is a view exemplary showing a computation method of a direction component of image according to the present embodiment. For example, the spatial frequency level computing section 210 computes a level of a spatial frequency component along each of a plurality of directions passing predetermined one point in an image 60. The spatial frequency level computing section 210 supplies data indicative of the computed each level of spatial frequency component to the image direction component specifying section 230. Then, the image direction component specifying section 230 may specify a direction 61 perpendicular to a direction 60a corresponding to a curved line 60a' having the highest level of the spatial frequency component as a direction component of the image 60, as shown in a graph 62 showing a level of spatial frequency in each direction.

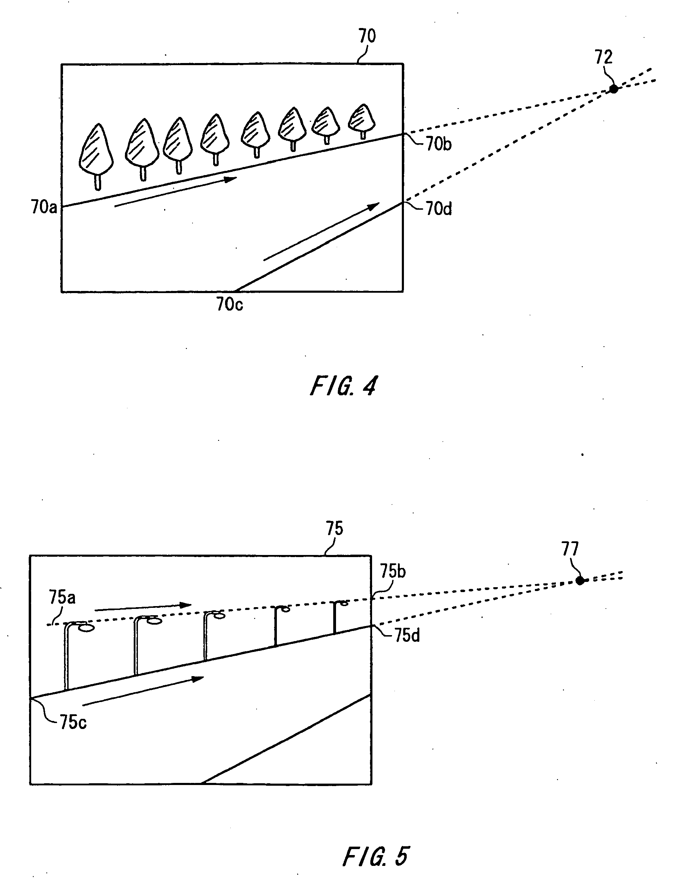

Fig. 4 is a view exemplary showing a computation method of a vanishing point according to the present embodiment. The vanishing point computing section 220 may compute an intersection of crossing straight lines by Hough transform as a vanishing point after extracting a segment element from an image. For example, a point, at which an extended line of a straight line linking ends 70a and 70b of a road included in an image 70 and an extended line of a straight line linking edges 70c and 70d of the road cross with each other, can be used as a vanishing point 72. The vanishing point computing section 220 supplies the computed vanishing point data to the image direction component specifying section 230. Then, the image direction component specifying section 230 may specify a direction facing the vanishing point computed from the vanishing point computing section 220 as a direction component of the image.

Moreover, the vanishing point computing section 220 may compute a vanishing point of the whole image. Then, the image direction component specifying section 230 may specify a direction facing a vanishing point of the whole image computed from the vanishing point computing section 220 as a direction component of image. For example, the vanishing point computing section 220 respectively computes vanishing points included in the taken image. Then, the image direction component specifying section 230 may compute a mean vanishing point of the computed vanishing points to specify a direction facing the computed mean vanishing point as a direction component of the whole image.

Fig. 5 is a view exemplary showing a computation method of a vanishing point according to the present embodiment. The vanishing point computing section 220 may compute a vanishing point from an object having a similar shape included in an image. For example, a point, in which an extended line of a line 75a-75b linking each head of street lamps having a similar shape included in image 75 and an extended line of a line 75c-75d linking each lower end of the street lamps cross with each other, may be used as a vanishing point 77. In addition, an object included in an image is not limited to a street lamp. Thus, if an object has a similar shape, the object may be, e.g., an electric pole, a guide light in a tunnel. The vanishing point computing section 220 supplies the computed vanishing point data to the image direction component specifying section 230. Then, the image direction component specifying section 230 may specify a direction facing the vanishing point computed from the vanishing point computing section 220 as a direction component of image.

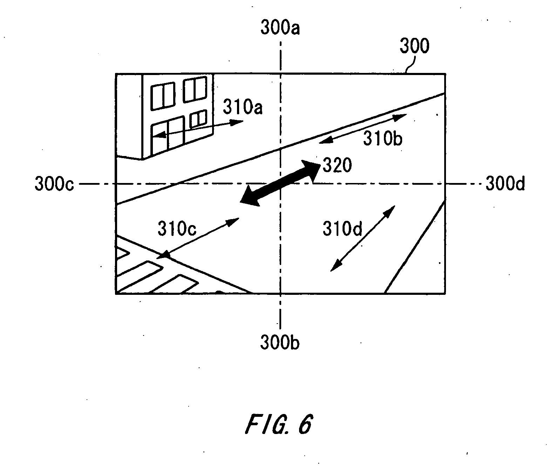

Fig. 6 is a view exemplary showing a computation method of a direction component of image according to the present embodiment. The image dividing section 240 divides the image output from the image storing section 50 into a plurality of areas. For example, the image dividing section 240 may divide an image 300 by means of a dashed line 300a-300b and a dashed line 300c-300d. The image dividing section 240 supplies the image data for the divided partial areas to the partial area direction component computing section 250. Then, the partial area direction component computing section 250 computes a direction component of each partial area about the plurality of areas divided by the image dividing section 240.

For example, the partial area direction component computing section 250 may compute a direction perpendicular to a direction having the largest level of a spatial frequency component of each partial area as a direction component of each partial area, by means of the method shown in description of Fig. 3. For example, direction components of the partial areas in the image 300 may respectively be computed as direction components 310a, 310b, 310c, and 310d. Then, the partial area direction component computing section 250 supplies the computed each direction component data to the image direction component specifying section 230.

The image direction component specifying section 230 receives the data of the direction component of each partial area from the partial area direction component computing section 250. Then, the image direction component specifying section 230 may compute a direction component obtained by averaging the direction components of the partial areas as a direction component of image. For example, the image direction component specifying section 230 computes a direction component 320 made by averaging the direction components 310a, 310b, 310c, and 310d of the partial areas. Then, the averaged direction component 320 may be computed as a direction component of the image 300. The image direction component specifying section 230 supplies the computed direction component data to the image layout section 30. Moreover, the image direction component specifying section 230 may specify a direction facing a vanishing point computed from the vanishing point computing section 220 as a direction component of image. Furthermore, the image direction component specifying section 230 may specify a direction component perpendicular to a direction having the largest level of a spatial frequency component as a direction component of the whole image, among the direction components of the partial areas.

According to the image outputting apparatus 10 according to the present embodiment, a direction component of image can be computed based on a direction component of each partial area divided into the plurality of partial areas. Therefore, the image outputting apparatus 10 can automatically specify a direction component of image by means of an image or an object included in the image. In this way, it is possible to automatically lay out images in an output area without respectively confirming and laying out a lot of images.

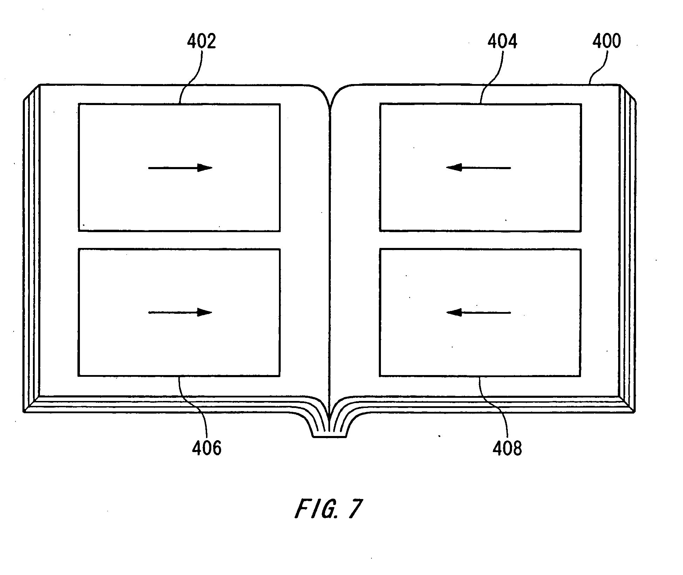

Fig. 7 is a view exemplary showing a layout of images in an output area according to the present embodiment. The image layout section 30 lays out images in the output area to face a central direction in the output area based on the direction components of images specified by the image direction component computing section 20. For example, the image layout section 30 may lay out images so that directions to vanishing points of objects included in an image 402, an image 404, an image 406, and an image 408 face the center of a spread page of a book 400 such as a magazine.

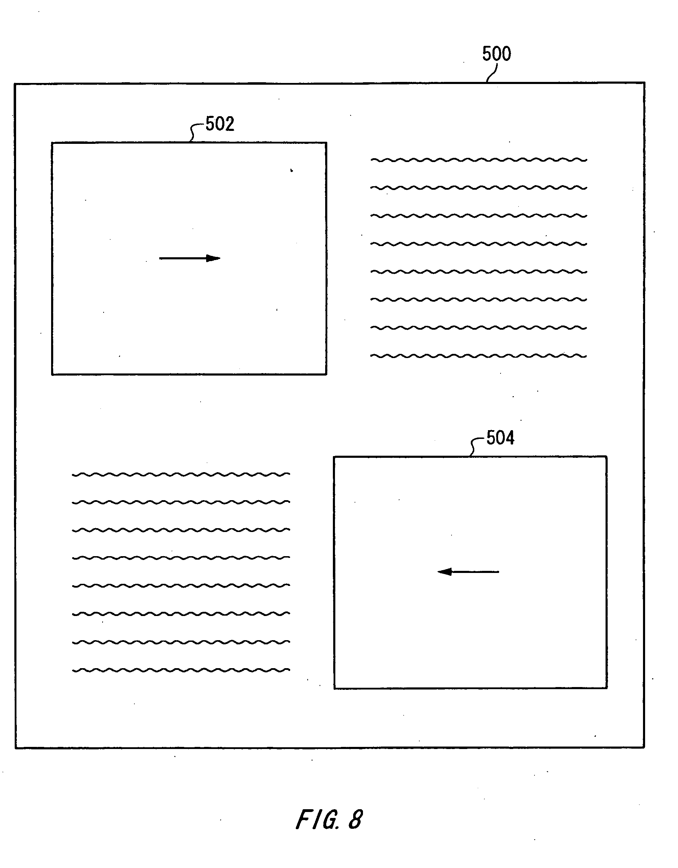

Fig. 8 is a view exemplary showing a layout of images in an output area according to the present embodiment. For example, the image layout section 30 may lay out images so that directions to vanishing points of objects included in an image 502 and an image 504 face the center of a page space 500 such as a poster.

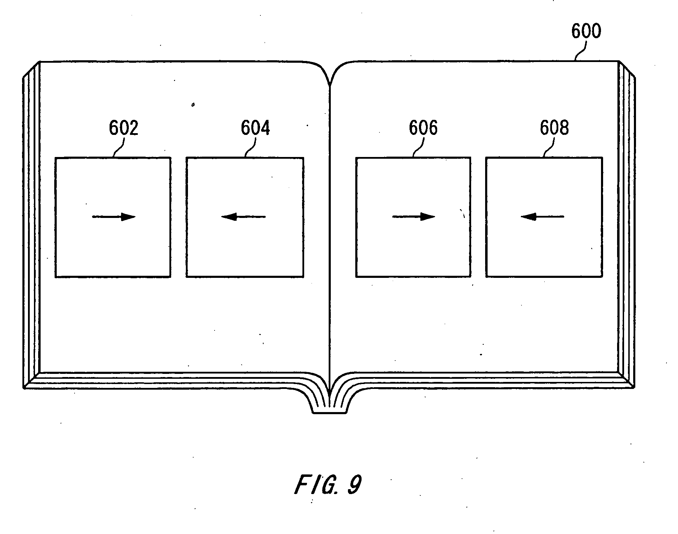

Fig. 9 is a view exemplary showing a layout of images in an output area according to the present embodiment. For example, the image layout section 30 may lay out images so that directions to vanishing points of objects included in an image 602, an image 604, an image 606, and an image 608 face the center of each page of a book 600 such as a magazine.

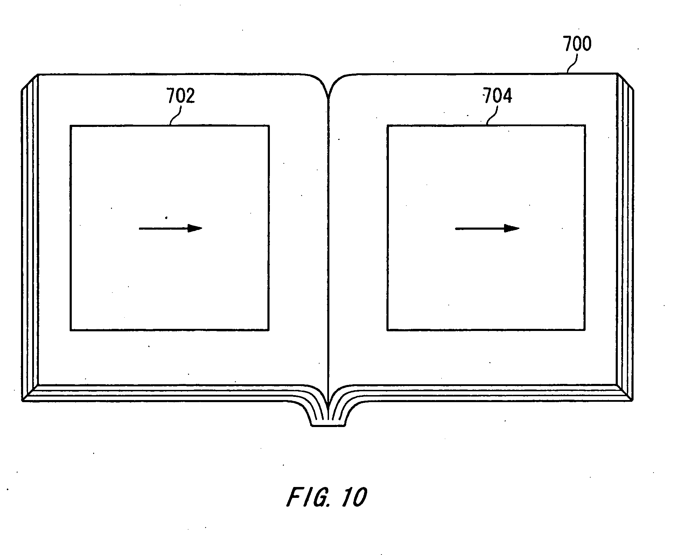

Fig. 10 is a view exemplary showing a layout of images in an output area according to the present embodiment. The image layout section 30 may layout images so that directions to vanishing points of objects included in an image 702 and an image 704 face, e.g., the next page of a book 700 such as a magazine.

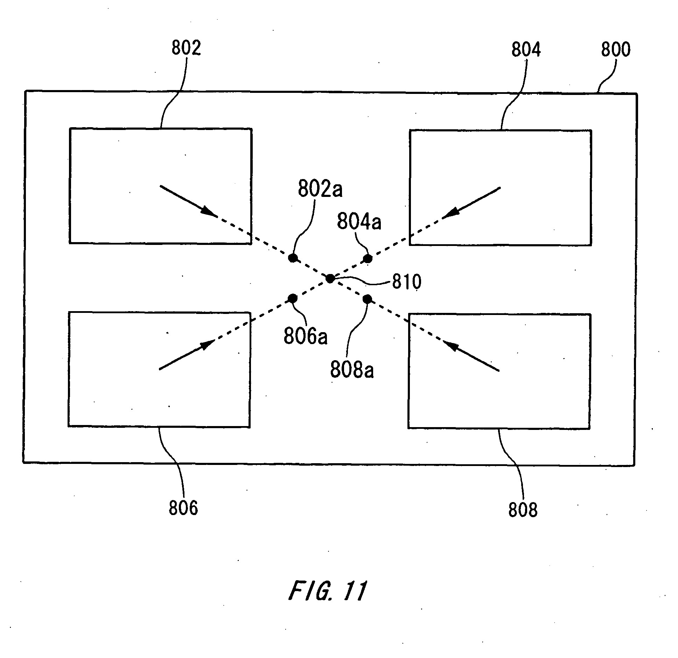

Fig. 11 is a view exemplary showing a layout of images in an output area according to the present embodiment. The image direction component specifying section 230 respectively specifies directions facing vanishing points of objects included in a plurality of images as direction components of the plurality of images. Then, the image layout section 30 may lay out the plurality of images in an output area so that the directions facing the vanishing points of the objects included in the plurality of images face the same position. For example, when vanishing points of an image 802, an image 804, an image 806, and an image 808 are respectively computed as a vanishing point 802a, a vanishing point 804a, a vanishing point 806a, and a vanishing point 808a, the images may be laid out in an output area 800 so that directions of the vanishing points face the same position 810.

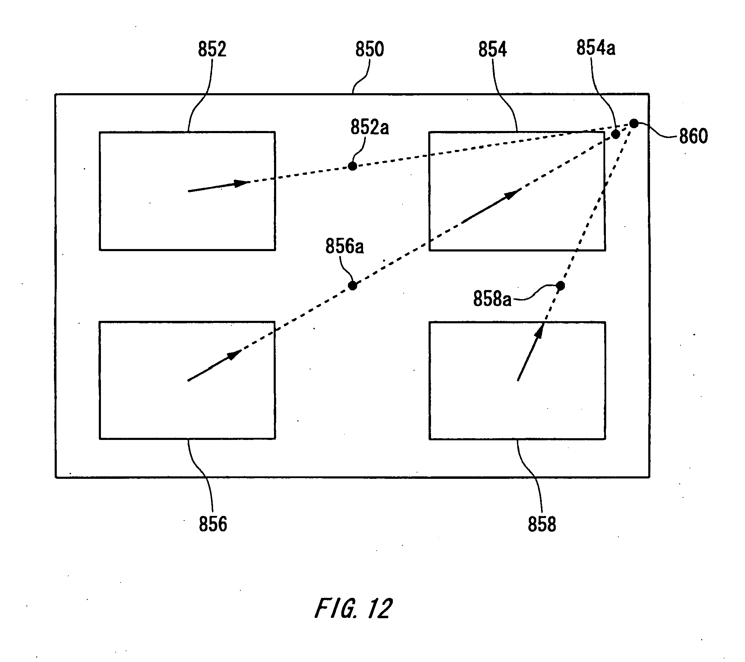

Fig. 12 is a view exemplary showing a layout of images in an output area according to the present embodiment. The image layout section 30 may lay out a plurality of images in an output area so that directions facing vanishing points of objects included in a plurality of images face the same position. For example, when vanishing points of an image 852, an image 854, an image 856, and an image 858 are respectively computed as a vanishing point 852a, a vanishing point 854a, a vanishing point 856a, and a vanishing point 858a, images may be laid out in an output area 850 so that the directions facing the vanishing points face the same position 860.

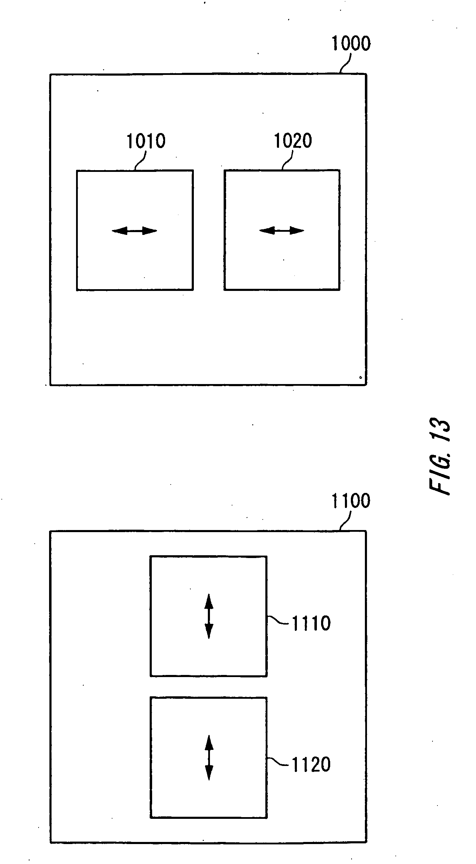

Fig. 13 is a view exemplary showing a layout of images in an output area according to the present embodiment. The image layout section 30 may lay out a plurality of images, which have the same direction with the highest level of spatial frequency, side-by-side along a direction perpendicular to the direction having the highest level of spatial frequency. For example, when an image 1010 and an image 1020 have a direction component of a horizontal direction, the image layout section 30 may lay out the image 1010 and the image 1020 in an output area 1000 so as to arrange the images on a line along a direction component of a horizontal direction. Moreover, when an image 1110 and an image 1120 have a direction component of a vertical direction, the image layout section 30 may lay out the image 1110 and the image 1120 in an output area 1100 so as to arrange the images on a line along a direction component of a vertical direction.

According to the image outputting apparatus 10 of the present embodiment, the image layout section 30 can lay out images in an output area so that a direction component of image specified by the image direction component computing section 20 faces a central direction of the output area. Moreover, the image layout section 30 can lay out a plurality of images in an output area so that directions facing vanishing points of objects included in the plurality of images face the same position. In this way, an appreciator can appreciate images with good composition without feeling a sense of discomfort for a layout of images.

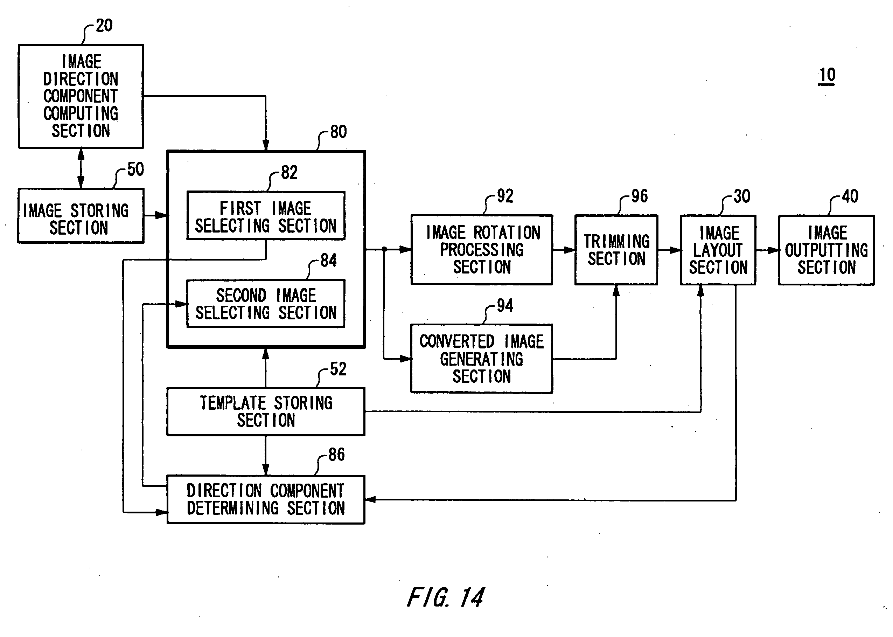

Fig. 14 is a view showing a functional configuration of an image outputting apparatus 10 according to another embodiment of the present invention. The image outputting apparatus 10 includes a template storing section 52, an image selecting section 80, a direction component determining section 86, an image rotation processing section 92, a converted image generating section 94, and a trimming section 96. Moreover, the image selecting section 80 has a first image selecting section 82 and a second image selecting section 84. In addition, the image outputting apparatus 10 according to the present embodiment may further include a part or the whole of a configuration and functions of the image outputting apparatus 10 described above with reference to Figs. 1 to 13.

The template storing section 52 stores a template for an output area in which an image arrangement position that is a position arranging an image and a direction component of image to be arranged at the image arrangement position have previously been determined. At least one image arrangement position may be determined for a template stored on the template storing section 52, and an image arrangement frame that is a frame arranging an image may correspond to an image arrangement position. Moreover, the template storing section 52 may store a template for an output area in which a first image arrangement position at which a first image should be arranged and a second image arrangement position at which a second image should be arranged have previously been determined. Then, the template storing section 52 may store a template for an output area in which the second image arrangement position and a direction component of image relative to a direction component of the first image have previously been determined.

Here, composition information may correspond to the image arrangement position included in the template stored on the template storing section 52. The composition information may be information indicative of a special feature of the image to be arranged at the image arrangement position. For example, the composition information may be a name of an object included in an image, a position in an image of a main object included in the image, a direction of an object included in an image, information indicative of an angle formed between an object included in an image and a normal direction of a face on the image, and so on. A direction component of image is an example of composition information. The template storing section 52 supplies the composition information associated with the image arrangement position included in the template to the image selecting section 80 based on the control of the image selecting section 80. Moreover, the template storing section 52 supplies the template to the image layout section 30 based on the control of the image layout section 30. The image storing section 50 may further store an image in association with composition information. The image storing section 50 supplies an image to the image selecting section 80 based on the control of the image selecting section 80. The image direction component computing section 20 specifies a direction component of image to store the specified direction component of image in association with the image on the image storing section 50. The image direction component computing section 20 supplies the computed direction component of image to the image selecting section 80.

The image selecting section 80 selects an image, which corresponds to composition information identical with the composition information associated with the image arrangement position included in the template stored on the template storing section 52, from the images stored on the image storing section 50. Specifically, the image selecting section 80 receives composition information associated with the image arrangement position included in the template from the template storing section 52. More specifically, the image selecting section 80 receives a direction component of image included in the composition information from the template storing section 52. Then, the image selecting section 80 selects an image, in which the direction component of image received from the template storing section 52 and the direction component of image computed from the image direction component computing section 20 are identical with each other, from the image storing section 50.

Moreover, the image selecting section 80 may have the first image selecting section 82 and the second image selecting section 84. The first image selecting section 82 selects the first image to be arranged at the first image arrangement position.
A main image is an example of the first image. The main image means an image that gives the most powerful impression to an appreciator in a page of an album. For example, the main image may be an image in which a chief character is included in an album. Moreover, the main image may be the most emphasized image among a plurality of images arranged on a page. Specifically, the main image may be a large image compared to other images, an image arranged at a front face compared to other images, and an image arranged at a middle position compared to other images. Besides, the main image may be an image of which a periphery is surrounded by a frame, an image in which a visual effect is performed on a subject, and so on. Moreover, the second image in the present embodiment may be a sub image. Here, the sub image may be an image including subjects except a chief character in an album. Moreover, the sub image may be an image that is smaller than the main image and is arranged far away the middle. Then, the second image selecting section 84 selects the second image including a direction component determined by the direction component determining section 86 to be described below. Specifically, the second image selecting section 84 selects an image having the direction component determined by the direction component determining section 86 from the image storing section 50. The image selecting section 80, the first image selecting section 82, and the second image selecting section 84 supply the selected image to the image rotation processing section 92 or the converted image generating section 94.

The direction component determining section 86 determines a direction component of the second image to be arranged at the second image arrangement position according to the direction component of the first image selected by the first image selecting section 82. Specifically, the direction component determining section 8 6 determines a direction component of the second image to be arranged at the second image arrangement position, based on the direction component of the first image selected by the first image selecting section 82 and a relative direction component of image included in the composition information of the image arrangement position of the template stored on the template storing section 52. For example, in order to arranges an image with the same direction component as the direction component of the first image at the second image arrangement position, the direction component determining section 86 may determine a direction component of the second image to be arranged at the second image arrangement position in the same direction as the direction component of the first image. Moreover, the direction component determining section 86 may determine the direction component of the second image to be arranged at the second image arrangement position in a direction different from the direction component of the first image. Furthermore, the direction component determining section 86 may independently determine a direction component of each image arrangement position when the template includes a plurality of image arrangement positions. The direction component determining section 86 supplies the determined direction components to the second image selecting section 84.

When the image selecting section 80 judges that there is not an image in which the direction component of image computed from the image direction component computing section 20 and the direction component of image associated with the image arrangement position included in the template stored on the template storing section 70 are identical with each other, the image rotation processing section 92 receives the direction component and an image stored on the image storing section 50 from the image selecting section 80. Then, the image rotation processing section 92 rotates the received image along a horizontal direction of a face of the image so that the direction component received from the image selecting section 80 and the direction component associated with the image arrangement position of the template are identical with each other. The image rotation processing section 92 supplies the rotated image to the trimming section 96.

When the image selecting section 80 judges that there is not an image in which the direction component computed from the image direction component computing section 20 and the direction component associated with the image arrangement position included in the template stored on the template storing section 52 are identical with each other, the converted image generating section 94 receives the direction component and an image stored on the image storing section 50 from the image selecting section 80. Then, the converted image generating section 94 generates an image on which geometric conversion is performed so that the direction component received from the image selecting section 80 and the direction component associated with the image arrangement position of the template stored on the template storing section 52 are identical with each other. For example, the converted image generating section 94 may convert the received image into a parallelogram to harmonize the direction component associated with the image arrangement position of the template and the direction component computed from the image direction component computing section 20. The converted image generating section 94 supplies the converted image to the trimming section 96.

The trimming section 96 trims off the image received from the converted image generating section 94 and the image rotation processing section 92 in the shape of an image arrangement frame in the image arrangement position. The trimming section 96 supplies the trimmed image to the image layout section 30. The image layout section 30 receives a template from the template storing section 52. Then, the image layout section 30 lays out the image received from the trimming section 96 at the image arrangement position in the template. Moreover, the image layout section 30 may receive the image generated from the converted image generating section 94 via the trimming section 96 and lay out the image at the image arrangement position in the template.

Moreover, the image layout section 30 lays out the first image selected by the first image selecting section 82 at the first image arrangement position. Subsequently, when the first image is laid out at the first image arrangement position, the image layout section 30 supplies the direction component of the first image to the direction component determining section 86. The direction component determining section 86 may determine a direction component of the second image to be arranged at the second image arrangement position according to the direction component of the first image received from the image layout section 30. Then, the image layout section 30 lays out the second image selected by the second image selecting section 84 at the second image arrangement position. The image layout section 30 supplies the laid out image to the image outputting section 40. The image outputting section 40 may print the laid out image on a paper medium by a printing section to output it as an album. Moreover, the image outputting section 40 may record the laid out image in a recording medium such a DVD.

According to the image outputting apparatus 10 of the present embodiment, since composition information previously corresponds to the image arrangement position included in the template, it is possible to automatically select an image identical with the composition information to layout the selected image at the image arrangement position. In this way, it is possible to omit trouble that a user selects an image suitable for an image arrangement position from a lot of images to lay out the selected image.

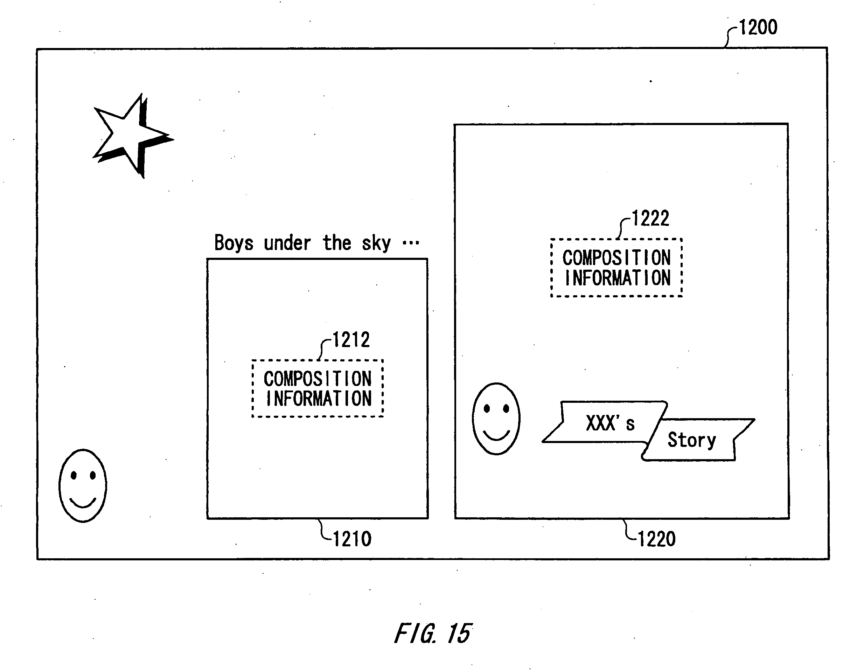

Fig. 15 is a view exemplary showing a template 1200 stored on the template storing section 52 according to the present embodiment. The template storing section 52 stores a template of an output area in which an image arrangement position and composition information of the image to be arranged at the image arrangement position have previously been determined. In addition, the image arrangement position may correspond to the image arrangement frame in which the image should be arranged. A plurality of image arrangement positions may be included in one output area. Moreover, the image arrangement frame corresponding to the image arrangement position may be a shape such as a generally circular shape, a generally polygonal shape, and a shape of an object included in the image. Furthermore, the template storing section 52 may store a template of an output area in which the first image arrangement position at which the first image should be arranged and the second image arrangement position at which the second image should be arranged have previously been determined. Moreover, the template storing section 52 may store a template of an output area in which the second image arrangement position and a direction component of image relative to the direction component of the first image have previously been determined.

Here, the composition information may be information showing a special feature of the image to be arranged at the image arrangement position such as an object name included in the image, a figure name, the cast of the figure (information that the figure is a chief character in the album according to a class of an album), information showing a position of the chief character in the image, a birthday of the figure included in the image, image capturing information such as a focusing distance when the image has been taken, the taken date, and a taken spot, a direction component of the image, and information showing an angle formed between an object included in the image and a normal line direction of a face on the image. Moreover, the template may be a template of a page of an album. Then, a page of an album may be a cover, a spread page, and one page of spread pages.

For example, the template 1200 includes an image arrangement frame 1210 and an image arrangement frame 1220. Then, composition information 1212 corresponds to the image arrangement frame 1210 and composition information 1222 corresponds to the image arrangement frame 1220. In this case, for example, the image selecting section 80 extracts the composition information 1222 associated with the image arrangement frame 1220 to select an image stored on the image storing section 50 in association with information identical with the composition information 1222. For example, when information related to a direction component of image corresponded to the composition information 1222, the image selecting section 80 selects an image stored on the image storing section 50 in association with information identical with the information related to the direction component. Then, the image layout section 30 lays out the image selected by the image selecting section 80 in the image arrangement frame 1220.

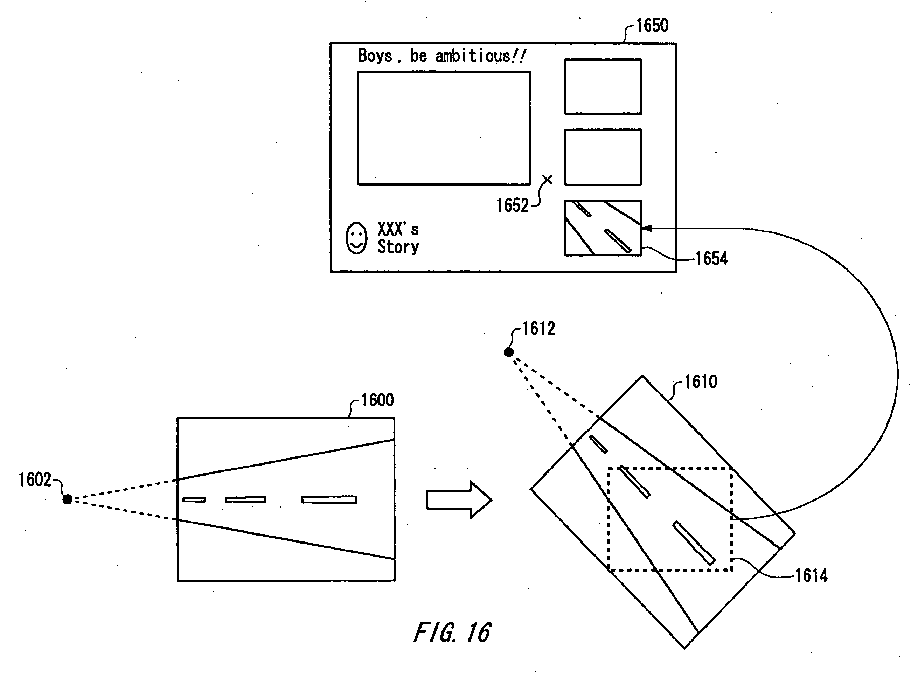

Fig. 16 is a view exemplary showing a process of the image rotation processing section 92 and the trimming section 96 according to the present embodiment. It is considered that a direction of a vanishing point of an image is used as composition information of the image to be arranged in an image arrangement frame 1654 corresponding to an image arrangement position included in a template 1650. That is, it is considered that composition information related to a direction of a vanishing point of an image corresponds to the image arrangement frame 1654 so that the direction of the vanishing point of the image arranged in the image arrangement frame 1650 faces a position 1652 in the template 1650.

Here, when the image storing section 50 stores only an image 1600 of which a vanishing point faces a direction 1602, the image rotation processing section 92 rotates the image 1600 along the horizontal direction of a face of the image 1600 so that a direction facing the position 1652 associated with the image arrangement frame 1654 in the template 1650 and the direction 1602 of direction components of the image 1600 are identical with each other. In this way, a direction 1612 of a vanishing point of an image 1610 rotated by the image rotation processing section 92 is identical with a direction facing the position 1652 associated with the image arrangement frame 1654. Subsequently, the trimming section 96 trims off an image 1614 with a shape of the image arrangement frame 1654 from the image 1610 rotated by the image rotation processing section 92. Then, the trimming section 96 supplies the trimmed image 1614 to the image layout section 30, and the image layout section 30 lays out the image 1614 in the image arrangement frame 1654.

According to the image outputting apparatus 10 of the present embodiment, although there is not an image identical with compositioninformation associated with animagearrangement position included in a template, it is possible to automatically rotates an image to harmonize the image with the composition information. In this way, since a user again takes an image identical with the composition information or performs an image processing on the taken image to be an image identical with the composition information by hand, it is possible to reduce trouble of a work largely.

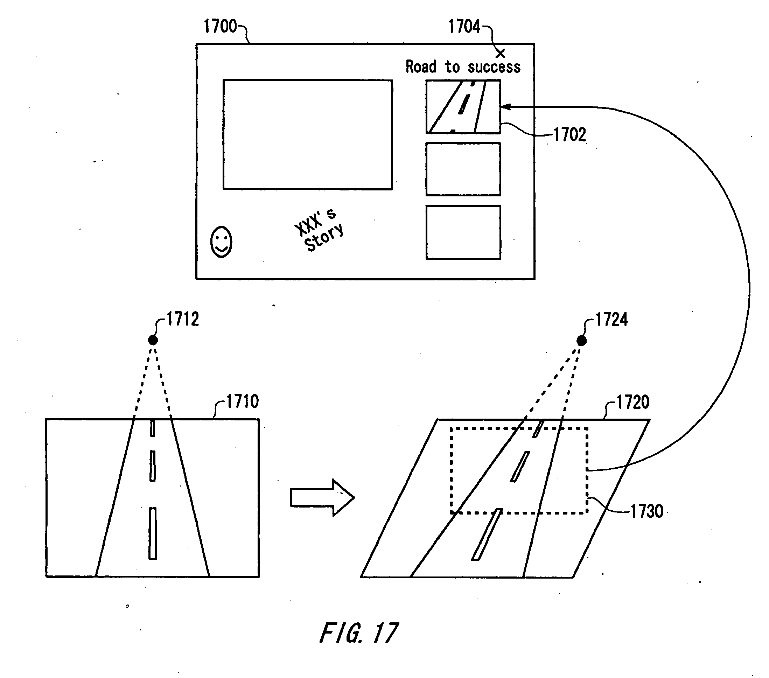

Fig. 17 is a view exemplary showing a process of the converted image generating section 94 and the trimming section 96 according to the present embodiment. It is considered that a direction of a vanishing point of an image is used as composition information of the image to be arranged in an image arrangement frame 1702 corresponding to an image arrangement position included in a template 1700. That is, it is considered that composition information related to a direction of a vanishing point of an image corresponds to the image arrangement frame 1702 so that the direction of the vanishing point of the image arranged in the image arrangement frame 1702 faces a position 1704 in the template 1700.

Here, it is considered that the image storing section 50 stores only an image 1710 of which a vanishing point faces a direction of a vanishing point 1712. In this case, the converted image generating section 94 generates an image 1720 made by performing geometric conversion on the image 1710 so that a direction of a vanishing point of image included in the composition information associated with the image arrangement frame 1702 in the template 1700 and the direction of the vanishing point 1712 of the image 1710 are identical with each other. For example, geometric conversion may be affine transformation. Then, the trimming section 96 trims off the image 1720 converted by the converted image generating section 94 in the shape of image arrangement frame 1702. Subsequently, the image layout section 30 lays out an image 1730 trimmed by the trimming section 96 in the image arrangement frame 1702.

According to the image outputting apparatus 10 of the present embodiment, since it is possible to generate an image made by performing geometric conversion on the image to lay out the image at an image arrangement position when there is not an image identical with composition information associated with an image arrangement position in a template, it is possible to automatically lay out an image having information identical with the composition information previously associated with an image arrangement position in a template without taking and making an image one more, even though an image corresponding to the composition information of image to be arranged at the image arrangement position is not stored on the image storing section 50.

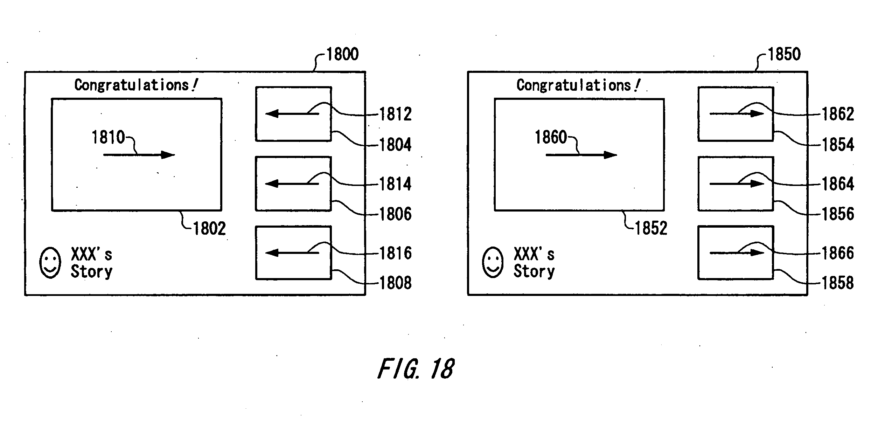

Fig. 18 is a view exemplary showing a process of the direction component determining section 86 according to the present embodiment. At first, the template storing section 52 stores a template of an output area in which at least one image arrangement position at which images should be arranged has previously been determined. Specifically, the template storing section 52 may store a template of an output area in which a first image arrangement position at which a first image should be arranged and a second image arrangement position at which a second image should be arranged have previously been determined. Then, the first image selecting section 82 selects the first image to be arranged at the first image arrangement position. Subsequently, the direction component determining section 86 determines a direction component of the second image to be arranged at the second image arrangement position according to the direction component of the first image selected by the first image selecting section 82. Moreover, the direction component determining section 86 may determine a direction component of the second image to be arranged at the second image arrangement position based on the direction component of the first image selected by the first image selecting section 82 and a relative direction component of an image stored on the template storing section 52.

For example, in a template 1800, it is considered that an image selected by the first image selecting section 82 is laid out at an image arrangement position 1802 and a direction of the direction component of the image is a direction 1810. In this case, the direction component determining section 86 may associate a direction 1812 or the like with an image arrangement position 1804 or the like in order that images facing a direction opposite to the direction 1810 are arranged at the image arrangement position 1804 or the like. Moreover, in a template 1850, it is considered that an image selected by the first image selecting section 82 is laid out at an image arrangement position 1852 and a direction of the direction component of the image is a direction 1860. In this case, the direction component determining section 86 may associate a direction 1862 or the like with an image arrangement position 1854 or the like in order that images facing the same direction as the direction 1860 are arranged at the image arrangement position 1854 or the like. In addition, the direction component determining section 86 may respectively associate a direction component different from one another with each image arrangement position when a template includes a plurality of image arrangement positions. Then, the second image selecting section 84 selects the second image including a direction component determined by the direction component determining section 86 from the image storing section 50. Then, the image layout section 30 respectively lays out images selected by the second image selecting section 84 at the image arrangement positions.

According to the image outputting apparatus 10 of the present embodiment, since it is possible to determine a direction component of image to be arranged in the second image arrangement frame according to a direction component of image arranged in the first image arrangement frame, an image in which an appropriate image is automatically laid out can be output without selecting the second image by a user.

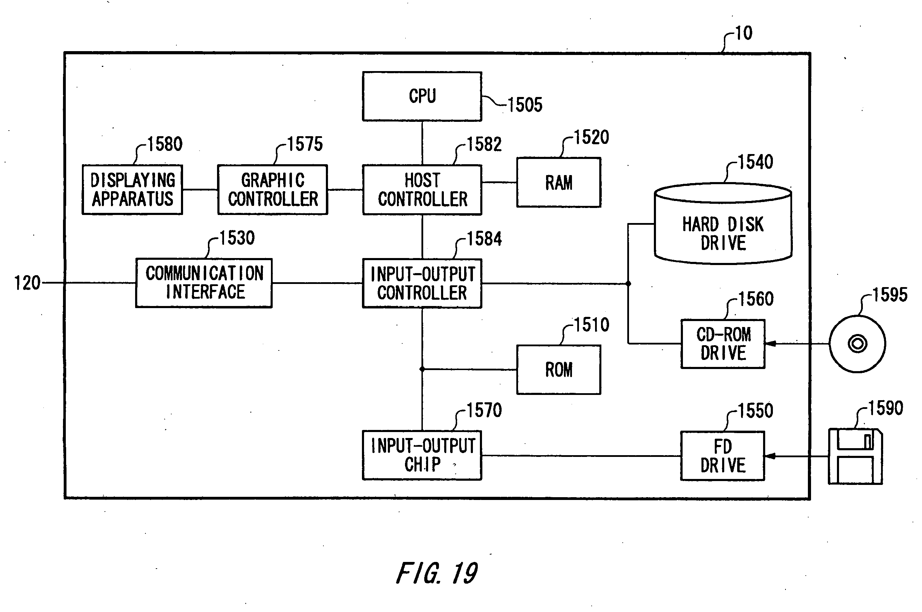

Fig. 19 is a view exemplary showing a hardware configuration of the image outputting apparatus 10 according to the present embodiment. The image outputting apparatus 10 includes a CPU peripheral section having a CPU 1505, a RAM 1520, a graphic controller 1575, and a displaying apparatus 1580 that are connected to one another by a host controller 1582, an input-output section having a communication interface 1530, a hard disk drive 1540, and a CD-ROM drive 1560 that are connected to the host controller 1582 by an input-output controller 1584, and a legacy input-output section having a ROM 1510, a flexible disk drive 1550, and an input-output chip 1570 that are connected to the input-output controller 1584.

The host controller 1582 connects the RAM 1520 to the CPU 1505 and the graphic controller 1575 for accessing the RAM 1520 at high transfer rate. The CPU 1505 operates based on a program stored on the ROM 1510 and the RAM 1520 to control each section. The graphic controller 1575 acquires image data generated by the CPU 1505 on a frame buffer provided in the RAM 1520, and displays the data on the displaying apparatus 1580. Alternatively, the graphic controller 1575 may include therein the frame buffer storing the image data generated from the CPU 1505.

The input-output controller 1584 connects the host controller 1582 to the communication interface 1530, the hard disk drive 1540, and the CD-ROM drive 1560 that are a comparatively fast input-output apparatus. The communication interface 1530 communicates with another apparatus via a network 120. The hard disk drive 1540 stores a program and data to be used by the CPU 1505 in the image outputting apparatus 10. The CD-ROM drive 1560 reads a program or data from a CD-ROM 1595, and provides the program or data to the hard disk drive 1540 via the RAM 1520.

Moreover, the ROM 1510, the flexible disk drive 1550, and the input-output chip 1570 that are a comparatively low-speed input-output apparatus are connected to the input-output controller 1584. The ROM 1510 stores a boot program to be executed during starting the image outputting apparatus 10, a program dependent on hardware of the image outputting apparatus 10, or the like. The flexible disk drive 1550 reads a program or data from a flexible disk 1590, and provides the program or data to the hard disk drive 1540 via the RAM 1520. The input-output chip 1570 connects various kinds of input-output apparatuses via the flexible disk drive 1550, or a parallel port, a serial port, a keyboard port, a mouse port.

An image outputting program provided to the hard disk drive 1540 via the RAM 1520 is stored on a recording medium such as the flexible disk 1590, the CD-ROM 1595, or an IC card in order to be provided by a user. The image outputting program is read from the recording medium, is installed in the hard disk drive 1540 in the image outputting apparatus 10 via the RAM 1520, and is executed in the CPU 1505. The image outputting program installed and executed in the image outputting apparatus 10 works on the CPU 1505 or the like and makes the image outputting apparatus 10 function as the image direction component computing section 20, the image layout section 30, the image outputting section 40, the image storing section 50, the spatial frequency level computing section 210, the vanishing point computing section 220, the image direction component specifying section 230, the image dividing section 240, the partial area direction component computing section 250, the template storing section 52, the image selectingsection80,the direction component determiningsection 86, the image rotation processing section 92, the converted image generating section 94, the trimming section 96, the first image selecting section 82, and the second image selecting section 84, which have been described with reference to Figs. 1 to 18.

Although the present invention has been described by way of an exemplary embodiment, it should be understood that those skilled in the art might make many changes and substitutions without departing from the scope of the present invention as defined by the appended claims. It is obvious from the definition of the appended claims that embodiments with such modifications also belong to the scope of the present invention.

## Claims

1. An image outputting apparatus (10) comprising:
an image direction component computing section (20) that computes a direction component of an image;
an image layout section (30) that lays out the image in an output area based on the direction component computed from said image direction component computing section; and
an image outputting section (10) that outputs the image laid out in the output area by said image layout section,
**characterized in that** said image direction component computing section (20) comprises:
a spatial frequency level computing section (210) that respectively computes levels of spatial frequencies along each of a plurality of directions passing one predetermined point in the image; and
an image direction component specifying section (230) that specifies a direction perpendicular to a direction having the largest level of the spatial frequencies computed from said spatial frequency level computing section as the direction component of the image.

2. The image outputting apparatus as claimed in claim 1, wherein said image layout section (30) lays out the image in the output area so that the direction component of the image specified by the image direction component specifying section faces a central direction of the output area.

3. The image outputting apparatus as claimed in claim 1, wherein
said image direction component computing section (20) further comprises:
an image dividing section (240) that divides the image into a plurality of partial areas; and
a partial area direction component computing section (250) that computes a direction component of each of the plurality of partial areas divided by the image dividing section, and
said image direction component specifying section (20) computes a mean direction component of the direction components of the plurality of partial areas computed from the partial area direction component computing section as a direction component of the image.

4. The image outputting apparatus as claimed in claim 1, wherein the image outputting apparatus further comprises:
a template storing section that stores a template of the output area in which an image arrangement position and a direction component of an image to be arranged at the image arrangement position are previously determined; and
an image selecting section that selects an image in which the direction component associated with the image arrangement position in the template stored on said template storing section and the direction component computed from said image direction component computing section are identical with each other, and
said image layout section lays out the image selected by said image selecting section at the image arrangement position in the template.

5. The image outputting apparatus as claimed in claim 4, wherein
the image outputting apparatus further comprises an image rotation processing section that rotates an image along a horizontal direction of a face of the image, so that the direction component computed from said image direction component computing section and the direction component associated with the image arrangement position in the template stored on said template storing section are identical with each other, when there is not an image in which the direction component computed from said image direction component computing section and the direction component associated with the image arrangement position in the template stored on said template storing section are identical with each other, and
said image layout section lays out the image rotated by said image rotation processing section at the image arrangement position in the template.

6. The image outputting apparatus as claimed in claim 5, wherein
the image outputting apparatus further comprises a trimming section that trims off the image rotated by said image rotation processing section in the shape of an image arrangement frame at the image arrangement position, and
said image layout section lays out the image trimmed by said trimming section at the image arrangement position.

7. The image outputting apparatus as claimed in claim 5, wherein
the image outputting apparatus further comprises a converted image generating section that generates an image made by performing geometric conversion on the image, so that the direction component computed from said image direction component computing section and the direction component associated with the image arrangement position in the template stored on said template storing section are identical with each other, when there is not an image in which the direction component computed from said image direction component computing section and the direction component associated with the image arrangement position in the template stored on said template storing section are identical with each other, an
said image layout section lays out the image generated from said converted image generating section at the image arrangement position.

8. The image outputting apparatus as claimed in claim 7, wherein
the image outputting apparatus further comprises a trimming section that trims off the image generated from said converted image generating section in the shape of an image arrangement frame at the image arrangement position, and
said image layout section lays out the image trimmed by said trimming section at the image arrangement position.

9. The image outputting apparatus as claimed in claim 1, wherein the image outputting apparatus further comprises:
a template storing section that stores a template of the output area in which a first image arrangement position at which a first image should be arranged and a second image arrangement position at which a second image should be arranged are previously determined;
a first image selecting section that selects the first image to be arranged at the first image arrangement position;
a direction component determining section that determines a direction component of the second image to be arranged at the second image arrangement position according to a direction component of the first image selected by said first image selecting section; and
a second image selecting section which selects the second image including the direction component determined by said direction component determining section, and
said image layout section lays out the first image selected by said first image selecting section at the first image arrangement position and lays out the second image selected by said second image selecting section at the second image arrangement position.

10. The image outputting apparatus as claimed in claim 9, wherein
said template storing section stores a template of the output area in which the second image arrangement position and a direction component of image relative to the direction component of the first image, and
said direction component determining section determines the direction component of the second image to be arranged at the second image arrangement position based on the direction component of the first image selected by said first image selecting section and the relative direction component of image stored on said template storing section.

11. An image outputting method comprising:
an image direction component computing step of computing a direction component of an image;
an image layout step of laying out the image in an output area based on the direction component computed in said image direction component computing step; and
an image outputting step of outputting the image laid out in the output area in said image layout step, **characterized in that** said image direction component computing step comprises:
a spatial frequency level computing step that respectively computes levels of spatial frequencies along each of a plurality of directions passing one predetermined point in the image; and
an image direction component specifying step that specifies a direction perpendicular to a direction having the largest level of the spatial frequencies computed by said spatial frequency level computing step as the direction component of the image.

12. An image outputting program for an image outputting apparatus that outputs an image, the program making the image outputting apparatus function as:
an image direction component computing section that computes a direction component of an image;
an image layout section that lays out the image in an output area based on the direction component computed from said image direction component computing section; and
an image outputting section that outputs the image laid out in the output area by said image layout section, **characterized in that** said image direction component computing section comprises:
a spatial frequency level computing section that respectively computes levels of spacial frequencies along each of a plurality of directions passing one predetermined point in the image; and
an image direction component specifying section that specifies a direction perpendicular to a direction having the largest level of the spatial frequencies computed from said spatial frequency level computing section as the direction component of the image.

## Patentansprüche

1. Bildausgabevorrichtung (10), umfassend:
einen Bildrichtungskomponenten-Berechnungsteil (20), der eine Richtungskomponente eines Bilds berechnet;
einen Bildlayoutteil (30), der das Bild basierend auf der von dem Bildrichtungskomponenten-Berechnungsteil berechneten Richtungskomponente das Bild in einem Ausgabebereich anlegt; und
einen Bildausgabeteil (10), der das in dem Ausgabebereich von dem Layoutteil ausgelegte Bild ausgibt,
**dadurch gekennzeichnet, dass** der Bildrichtungskomponenten-Berechnungsteil (20) aufweist:
einen Raumfrequenzniveau-Berechnungsteil (210), der Niveaus von Raumfrequenzen entlang jeder von mehreren Richtungen berechnet, die einen vorbestimmten Punkt innerhalb des Bilds passieren; und
einen Bildrichtungskomponenten-Spezifizierteil (230), der eine Richtung rechtwinklig zu einer Richtung mit dem höchsten Niveau der von dem Raumfrequenzniveau-Berechnungsteil berechneten Raumfrequenzen, als die Richtungskomponente des Bilds spezifiziert.

2. Vorrichtung nach Anspruch 1, bei der der Bildlayoutteil (30) das Bild in dem Ausgabebereich in der Weise anlegt, dass die von dem Bildrichtungskomponenten-Spezifizierteil spezifizierte Richtungskomponente des Bilds einer Zentralrichtung des Ausgabebereichs gegenüberliegt.

3. Vorrichtung nach Anspruch 1, bei der der Bildrichtungskomponenten-Berechnungsteil (20) außerdem aufweist:
einen Bildteilungsteil (240), der das Bild in eine Mehrzahl von Teilbereichen aufteilt; und
einen Teilbereichs-Richtungskomponenten-Berechnungsteil (250), der eine Richtungskomponente jedes der mehreren von dem Bildteilungsteil aufgeteilten Teilbereiche berechnet, und
wobei der Bildrichtungskomponenten-Spezifizierteil (20) eine Hauptrichtungskomponente der Richtungskomponenten der mehreren von dem Teilbereichs-Richtungskomponenten-Berechnungsteil berechneten Teilbereiche als eine Richtungskomponente des Bilds berechnet.

4. Vorrichtung nach Anspruch 1, bei der die Bildausgabevorrichtung außerdem aufweist:
einen Schablonenspeicherteil, der eine Schablone des Ausgabebereichs, in der eine Bildanordnungsstelle und eine Richtungskomponente eines an der Bildanordnungsstelle angeordneten Bilds vorab festgelegt sind, speichert; und
einen Bildauswählteil, der ein Bild auswählt, in welchem die Richtungskomponente, die zu der Bildanordnungsstelle in der in dem Schablonenspeicherteil gespeicherten Schablone gehört, und die Richtungskomponente, die von dem Bildrichtungskomponenten-Berechnungsteil berechnet wurde, einander identisch sind, und
der Bildlayoutteil das von dem Bildauswählteil ausgewählte Bild an der Bildanordnungsstelle in der Schablone anlegt.

5. Vorrichtung nach Anspruch 4, bei der die Bildausgabevorrichtung außerdem aufweist: einen Bilddrehverarbeitungsteil, der ein Bild entlang einer horizontalen Richtung einer Seite des Bilds derart dreht, dass die von dem Bildrichtungskomponenten-Berechnungsteil berechnete Richtungskomponente und die Richtungskomponente, die zu der Bildanordnungsstelle in der in dem Schablonenspeicherteil gespeicherten Schablone gehört, einander identisch sind, wenn es kein Bild gibt, in welchem die von dem Bildrichtungskomponenten-Berechnungsteil berechnete Richtungskomponente und die Richtungskomponente, die zu der Bildanordnungsstelle in der in dem Schablonenspeicherteil gespeicherte Schablone gehört, einander identisch sind, und
wobei der Bildlayoutteil das von dem Bilddrehverarbeitungsteil gedrehte Bild an der Bildanordnungsstelle in der Schablone anlegt.

6. Vorrichtung nach Anspruch 5, bei der
die Bildausgabevorrichtung außerdem aufweist: einen Trimmteil, der das von dem Bilddrehverarbeitungsteil gedrehte Bild die Form eines Bildanordnungsrahmens an der Bildanordnungsstelle beschneidet, und
der Bildlayoutteil das von dem Trimmteil beschnittene Bild an der Bildanordnungsstelle anlegt.

7. Vorrichtung nach Anspruch 5, bei der
die Bildausgabevorrichtung außerdem aufweist: einen Wandelbild-Erzeugungsteil, der ein Bild erzeugt, welches entsteht durch Ausführen einer geometrischen Umwandlung an dem Bild in der Weise, dass die von dem Bildrichtungskomponenten-Berechnungsteil berechnete Richtungskomponente und die Richtungskomponente, die zu der Bildanordnungsstelle in der in dem Schablonenspeicherteil gespeicherten Schablone gehört, einander identisch sind, wenn es nicht ein Bild gibt, in welchem die von dem Bildrichtungskomponenten-Berechnungsteil berechnete Richtungskomponente und die Richtungskomponente, die zu der Bildanordnungsstelle in der in dem Schablonenspeicherteil gespeicherten Schablone gehört, einander identisch sind, und
der Bildlayoutteil das von dem Wandelbild-Erzeugungsteil erzeugte Bild an der Bildanordnungsstelle anlegt.

8. Vorrichtung nach Anspruch 7, bei der
die Bildausgabevorrichtung außerdem aufweist: einen Trimmteil, der das von dem Wandelbild-Erzeugungsteil erzeugte Bild in der Form eines Bildanordnungsrahmens an der Bildanordnungsstelle beschneidet, und
der Bildlayoutteil das von dem Trimmteil beschnittene Bild an der Bildanordnungsstelle anlegt.

9. Vorrichtung nach Anspruch 1, bei der die Bildausgabevorrichtung außerdem aufweist:
einen Schablonenspeicherteil, der eine Schablone des Ausgabebereichs, in welchem eine erste Bildanordnungsstelle, an der ein erstes Bild angeordnet werden sollte, und eine zweite Bildanordnungsstelle, an der ein zweites Bild angeordnet werden sollte, vorab festgelegt sind, speichert;
einen ersten Bildauswählteil, der das an der ersten Bildanordnungsstelle anzuordnende erste Bild auswählt;
einen Richtungskomponenten-Bestimmungsteil, der eine Richtungskomponente des zweiten an der zweiten Bildanordnungsstelle anzuordnenden Bilds nach Maßgabe einer Richtungskomponente des von dem ersten Bildauswählteil ausgewählten Bildes bestimmt; und
einen zweiten Bildauswählteil, der das zweite Bild mit der von dem Richtungskomponenten-Bestimmungsteil bestimmten Richtungskomponente auswählt, und wobei der Bildlayoutteil das erste, von dem ersten Bildauswählteil ausgewählte Bild von der ersten Bildanordnungsstelle anlegt und das zweite, von dem zweiten Bildauswählteil ausgewählte Bild an der zweiten Bildanordnungsstelle anlegt.

10. Vorrichtung nach Anspruch 9, bei der
der Schablonenspeicherteil eine Schablone des Ausgabebereichs speichert, in welcher die zweite Bildanordnungsstelle und eine Richtungskomponente des Bilds in Bezug auf die Richtungskomponente des ersten Bilds vorhanden sind, und
der Richtungskomponenten-Bestimmungsteil die Richtungskomponente des zweiten, an der zweiten Bildanordnungsstelle anzuordnenden Bilds basierend auf der Richtungskomponente des von dem ersten Bildwählteil ausgewählten ersten Bilds und basierend auf der relativen Richtungskomponente eines in dem Schablonenspeicherteil gespeicherten Bilds bestimmt.

11. Bildausgabeverfahren, umfassend:
einen Bildrichtungskomponenten-Berechnungsschritt zum Berechnen Richtungskomponente eines Bilds;
einen Bildlayoutschritt zum Anlegen des Bilds in einem Ausgabebereich basierend auf der in dem Bildrichtungskomponenten-Berechnungsschritt berechneten Richtungskomponente; und
einen Bildausgabeschritt zum Ausgeben des in dem Bildlayoutschritt innerhalb des Ausgabebereichs angelegten Bilds, **dadurch gekennzeichnet, dass** der Bildrichtungskomponenten-Berechnungsschritt umfasst:
einen Raumfrequenzniveau-Berechnungsschritt, der Niveaus von Raumfrequenzen entlang jeder einer Mehrzahl von Richtungen berechnet, die einen vorbestimmten Punkt innerhalb des Bilds passieren; und
einen Bildrichtungskomponenten-Spezifizierschritt, der eine Richtung rechtwinklig zu einer Richtung mit dem höchsten Niveau der von dem Raumfrequenzniveau-Berechnungsschritt berechneten Frequenzen als die Richtungskomponente des Bilds spezifiziert.

12. Bildausgabeprogramm für eine Bildausgabevorrichtung, die ein Bild ausgibt, wobei das Programm die Bildausgabevorrichtung fungieren lässt als :
einen Bildrichtungskomponenten-Berechnungsteil, der eine Richtungskomponente eines Bilds berechnet;
einen Bildlayoutteil, der das Bild basierend auf der von dem Bildrichtungskomponenten-Berechnungsteil berechneten Richtungskomponente das Bild in einem Ausgabebereich anlegt; und
einen Bildausgabeteil, der das in dem Ausgabebereich von dem Layoutteil ausgelegte Bild ausgibt,
**dadurch gekennzeichnet, dass** der Bildrichtungskomponenten-Berechnungsteil aufweist:
einen Raumfrequenzniveau-Berechnungsteil, der Niveaus von Raumfrequenzen entlang jeder von mehreren Richtungen berechnet, die einen vorbestimmten Punkt innerhalb des Bilds passieren; und
einen Bildrichtungskomponenten-Spezifizierteil, der eine Richtung rechtwinklig zu einer Richtung mit dem höchsten Niveau der von dem Raumfrequenzniveau-Berechnungsteil berechneten Raumfrequenzen, als die Richtungskomponente des Bilds spezifiziert.

## Revendications

1. Appareil de commande de sortie d'image (10) comprenant :
une section de calcul de composante de direction d'image (20) qui calcule une composante de direction d'une image ;
une section de configuration d'image (30) qui configure l'image dans une zone de sortie sur la base de la composante de direction calculée à partir de ladite section de calcul de composante de direction d'image ; et
une section de sortie d'image (10) qui délivre en sortie l'image configurée dans la zone de sortie par ladite section de configuration d'image, **caractérisé en ce que** ladite section de calcul de composante de direction d'image (20) comprend :
une section de calcul de niveaux de fréquences spatiales (210) qui calcule respectivement des niveaux de fréquences spatiales le long de chacune d'une pluralité de directions passant par un point prédéterminé dans l'image ; et
une section de spécification de composante de direction d'image (230) qui spécifie une direction perpendiculaire à une direction ayant le niveau le plus élevé parmi les fréquences spatiales calculées à partir de ladite section de calcul de niveaux de fréquences spatiales en tant que la composante de direction de l'image.

2. Appareil de commande de sortie d'image selon la revendication 1, dans lequel ladite section de configuration d'image (30) configure l'image dans la zone de sortie de telle sorte que la composante de direction de l'image spécifiée par la section de spécification de composante de direction d'image se trouve face à une direction centrale de la zone de sortie.

3. Appareil de commande de sortie d'image selon la revendication 1, dans lequel
ladite section de calcul de composante de direction d'image (20) comprend par ailleurs :
une section de division d'image (240) qui divise l'image en une pluralité de zones partielles ; et
une section de calcul de composante de direction de zone partielle (250) qui calcule une composante de direction de chacune de la pluralité de zones partielles divisées par la section de division d'image, et
ladite section de spécification de composante de direction de sortie d'image (20) calcule une composante de direction de sortie moyenne des composantes de direction de la pluralité de zones partielles calculées à partir de la section de calcul de composante de direction de zone partielle en tant qu'une composante de direction de l'image.

4. Appareil de commande de sortie d'image selon la revendication 1, dans lequel
l'appareil de commande de sortie d'image comprend par ailleurs :
une section de stockage de modèle qui contient un modèle de la zone de sortie dans laquelle une position de placement d'image et une composante de direction d'une image devant être placée à la position de placement d'image ont été préalablement déterminées ; et
une section de sélection d'image qui sélectionne une image dans laquelle la composante de direction associée à la position de placement d'image dans le modèle stocké dans ladite section de stockage de modèle et la composante de direction calculée à partir de ladite section de calcul de composante de direction d'image sont identiques l'une à l'autre, et
ladite section de configuration d'image configure l'image sélectionnée par ladite section de sélection d'image à la position de placement d'image dans le modèle.

5. Appareil de commande de sortie d'image selon la revendication 4, dans lequel
l'appareil de commande de sortie d'image comprend par ailleurs une section de commande de rotation d'image qui commande une rotation d'une image le long d'une direction horizontale d'une face de l'image, de telle sorte que la composante de direction calculée à partir de ladite section de calcul de composante de direction d'image et la composante de direction associée à la position de placement d'image dans le modèle stocké dans ladite section de stockage de modèle sont identiques l'une à l'autre, quand il n'y a pas d'image dans laquelle la composante de direction calculée à partir de ladite section de calcul de composante de direction d'image et la composante de direction associée à la position de placement d'image dans le modèle stocké dans ladite section de stockage de modèle sont identiques l'une à l'autre, et
ladite section de configuration d'image configure l'image qui a été commandée en rotation par ladite section de commande de rotation d'image à la position de placement d'image dans le modèle.

6. Appareil de commande de sortie d'image selon la revendication 5, dans lequel
l'appareil de commande de sortie d'image comprend par ailleurs une section de rognage qui rogne l'image qui a été commandée en rotation par ladite section de commande de rotation d'image sous la forme d'une trame de placement d'image à la position de placement d'image, et
ladite section de configuration d'image configure l'image rognée par ladite section de rognage à la position de placement d'image.

7. Appareil de commande de sortie d'image selon la revendication 5, dans lequel
l'appareil de commande de sortie d'image comprend par ailleurs une section de génération d'image convertie qui génère une image réalisée en exécutant une conversion géométrique sur l'image, de telle sorte que la composante de direction calculée à partir de ladite section de calcul de composante de direction d'image et la composante de direction associée à la position de placement d'image dans le modèle stocké dans ladite section de stockage de modèle sont identiques l'une à l'autre, quand il n'y a pas d'image dans laquelle la composante de direction calculée à partir de ladite section de calcul de composante de direction d'image et la composante de direction associée à la position de placement d'image dans le modèle stocké dans ladite section de stockage de modèle sont identiques l'une à l'autre, et
ladite section de configuration d'image configure l'image générée par ladite section de génération d'image convertie à la position de placement d'image.

8. Appareil de commande de sortie d'image selon la revendication 7, dans lequel
l'appareil de commande de sortie d'image comprend par ailleurs une section de rognage qui rogne l'image générée à partir de ladite section de génération d'image convertie sous la forme d'une trame de placement d'image à la position de placement d'image, et
ladite section de configuration d'image configure l'image rognée par ladite section de rognage à la position de placement d'image.

9. Appareil de commande de sortie d'image selon la revendication 1, dans lequel
l'appareil de commande de sortie d'image comprend par ailleurs :
une section de stockage de modèle qui contient un modèle de la zone de sortie dans laquelle une première position de placement d'image au niveau de laquelle une première image doit être placée et une seconde position de placement d'image au niveau de laquelle une seconde image doit être placée ont été préalablement déterminées ;
une première section de sélection d'image qui sélectionne la première image devant être placée à la première position de placement d'image ;
une section de détermination de composante de direction qui détermine une composante de direction de la seconde image devant être placée à la seconde position de placement d'image sur la base d'une composante de direction de la première image sélectionnée par ladite première section de sélection d'image ; et
une seconde section de sélection d'image qui sélectionne la seconde image comprenant la composante de direction déterminée par ladite section de détermination de composante de direction, et
ladite section de configuration d'image configure la première image sélectionnée par ladite première section de sélection d'image à la première position de placement d'image et configure la seconde image sélectionnée par ladite seconde section de sélection d'image à la seconde position de placement d'image.

10. Appareil de commande de sortie d'image selon la revendication 9, dans lequel
ladite section de stockage de modèle contient un modèle de la zone de sortie dans laquelle la seconde position de placement d'image et une composante de direction d'image relative à la composante de direction de la première image, et
ladite section de détermination de composante de direction détermine la composante de direction de la seconde image devant être placée à la seconde position de placement d'image sur la base de la composante de direction de la première image sélectionnée par ladite première section de sélection d'image et la composante de direction d'image relative stockée dans ladite section de stockage de modèle.

11. Procédé de commande de sortie d'image comprenant :
une étape de calcul de composante de direction d'image consistant à calculer une composante de direction d'une image ;
une étape de configuration d'image consistant à configurer l'image dans une zone de sortie sur la base de la composante de direction calculée au cours de ladite étape de calcul de composante de direction d'image ; et
une étape de sortie d'image consistant à délivrer en sortie l'image configurée dans la zone de sortie au cours de ladite étape de configuration, **caractérisé en ce que** ladite étape de calcul de composante de direction d'image comprend :
une étape de calcul de niveaux de fréquences spatiales qui calcule respectivement des niveaux de fréquences spatiales le long de chacune d'une pluralité de directions passant par un point prédéterminé dans l'image ; et
une étape de spécification de composante de direction d'image qui spécifie une direction perpendiculaire à une direction ayant le niveau le plus élevé parmi les fréquences spatiales calculées au cours de ladite étape de calcul de niveaux de fréquences spatiales en tant que la composante de direction de l'image.

12. Programme de commande de sortie d'image pour un appareil de commande de sortie d'image qui délivre en sortie une image, le programme commandant à l'appareil de commande de sortie d'image de fonctionner en tant :
qu'une section de calcul de composante de direction d'image qui calcule une composante de direction d'une image ;
qu'une section de configuration d'image qui configure l'image dans une zone de sortie sur la base de la composante de direction calculée à partir de ladite section de calcul de composante de direction d'image ; et
qu'une section de sortie d'image qui délivre en sortie l'image configurée dans la zone de sortie par ladite section de configuration d'image, **caractérisé en ce que** ladite section de calcul de composante de direction d'image comprend :
une section de calcul de niveaux de fréquences spatiales qui calcule respectivement des niveaux de fréquences spatiales le long de chacune d'une pluralité de directions passant par un point prédéterminé dans l'image ; et
une section de spécification de composante de direction d'image qui spécifie une direction perpendiculaire à une direction ayant le niveau le plus élevé parmi les fréquences spatiales calculées à partir de ladite section de calcul de niveaux de fréquences spatiales en tant que la composante de direction de l'image.
